# EUROPEAN PATENT APPLICATION

(11) **EP 4 787 126 A1**
(43) Date of publication of application: **05.08.2026**
(21) Application number: 24940929.3
(22) Date of filing: 14.11.2024
(51) Int. Cl.: G06F 3/01

(54) **WEARABLE DEVICE AND FUNCTION TRIGGERING METHOD FOR WEARABLE DEVICE**

(71) Applicant: Shenzhen Shokz Co., Ltd., Shenzhen, Guangdong 518108 (CN)
(72) Inventor: ZHOU, Libin, Shenzhen, Guangdong 518108 (CN); WANG, Liang, Shenzhen, Guangdong 518108 (CN)
(74) Representative: Wang, Bo
(86) International application number: PCT/CN2024/132018
(87) International publication number: WO 2026/102653

(57) **Abstract**

The present disclosure relates to a wearable device and a method for triggering a function of the wearable device. The wearable device is provided with a trigger sensor, the trigger sensor is configured to detect a trigger action applied to the wearable device, the method including: acquiring a kinematic parameter of a wearer of the wearable device; determining a motion state of the wearer according to the kinematic parameter; selecting a trigger mode according to the motion state, wherein different motion states correspond to different trigger modes; executing at least one trigger function based on the selected trigger mode and a detection signal of the trigger sensor, wherein a same trigger function exists in different trigger modes, and in the different trigger modes, trigger conditions required to execute the same trigger function are different.

## Description

### TECHNICAL FIELD

The present disclosure relates to the field of electronic device technology, and in particular to a wearable device and a method for triggering a function of the wearable device.

### BACKGROUND

With the continuous popularization of electronic devices, the electronic devices have become indispensable social and entertainment tools in people's daily lives, and people's requirements for the electronic devices also have increasingly higher. Electronic devices such as earphones and smart glasses have also been widely used in people's daily lives. The electronic devices can be used in conjunction with terminal devices such as mobile phones and computers to provide users with an auditory feast.

Currently, wearable devices such as Bluetooth earphones and smart glasses usually have a touch mode, so that users can control the functions of the wearable devices through touch operations. However, during daily activities such as running and walking, the user's hair, clothes, headbands, etc. , are easy to touch the wearable devices such as Bluetooth earphones and smart glasses, which easily causes accidentally triggering the wearable devices, resulting in erroneous triggering of functions, thereby affecting the user experience.

### SUMMARY

To solve the above technical problem, one technical solution adopted in the present disclosure is to provide a method for triggering a function of a wearable device, wherein the the wearable device is provided with a trigger sensor, the trigger sensor is configured to detect a trigger action applied to the wearable device. The method includes: acquiring a kinematic parameter of a wearer of the wearable device; determining a motion state of the wearer according to the kinematic parameter; selecting a trigger mode according to the motion state, wherein different motion states correspond to different trigger modes; executing at least one trigger function based on the selected trigger mode and a detection signal of the trigger sensor, wherein a same trigger function exists in different trigger modes, and in the different trigger modes, trigger conditions required to execute the same trigger function are different.

In some embodiments, the motion state includes a first motion state and a second motion state, wherein a motion intensity characterized by the second motion state is higher than a motion intensity characterized by the first motion state; the trigger mode includes a first trigger mode and a second trigger mode; the selecting the trigger mode according to the motion state includes: in response to the motion state being the first motion state, switching the trigger mode to the first trigger mode; in response to the motion state being the second motion state, switching the trigger mode to the second trigger mode, wherein a trigger condition required to execute the same trigger function in the second trigger mode is more difficult than a trigger condition required to execute the same trigger function in the first trigger mode.

In some embodiments, the wearable device is provided with at least two trigger sensors, wherein a count of trigger sensors required to satisfy corresponding trigger conditions for executing the same trigger function in the second trigger mode is greater than a count of trigger sensors required to satisfy corresponding trigger conditions for executing the same trigger function in the first trigger mode.

In some embodiments, the at least two trigger sensors include a first sensor and a second sensor; the executing the at least one trigger function based on the selected trigger mode and the detection signal of the trigger sensor includes: in the first trigger mode, executing the same trigger function requires that a detection signal of at least one of the first sensor and the second sensor satisfies a corresponding trigger condition; in the second trigger mode, executing the same trigger function requires that detection signals of both the first sensor and the second sensor satisfy respective corresponding trigger conditions.

In some embodiments, in the first trigger mode, the same trigger function is executed when the first sensor satisfies the corresponding trigger condition and when the second sensor satisfies the corresponding trigger condition.

In some embodiments, in the first trigger mode, a first trigger function is executed when a detection signal of the first sensor satisfies a corresponding trigger condition, and a second trigger function is executed when a detection signal of the second sensor satisfies a corresponding trigger condition, wherein the first trigger function is different from the second trigger function.

In some embodiments, in the second trigger mode, the first trigger function is executed when the detection signal of the first sensor and the detection signal of the second sensor respectively satisfy corresponding trigger conditions, wherein the trigger condition corresponding to the second sensor in the second trigger mode is different from the trigger condition corresponding to the second sensor in the first trigger mode.

In some embodiments, the trigger condition corresponding to the first sensor includes a first trigger condition, and the trigger condition corresponding to the second sensor includes a second trigger condition and a third trigger condition; in the first trigger mode, the first trigger function is executed when the detection signal of the first sensor satisfies the first trigger condition, and the second trigger function is executed when the detection signal of the second sensor satisfies the second trigger condition; in the second trigger mode, the first trigger function is executed when the detection signal of the first sensor satisfies the first trigger condition and the detection signal of the second sensor satisfies the third trigger condition.

In some embodiments, the first trigger condition and the third trigger condition are configured to detect one of a touch action and a tap action, and the second trigger condition is configured to detect the other of the touch action and the tap action.

In some embodiments, the first trigger condition is configured to detect a first parameter of at least one of the touch action and the tap action, and the third trigger condition is configured to detect a second parameter of at least one of the touch action and the tap action.

In some embodiments, the first parameter is a capacitance parameter, and the second parameter is a vibration waveform parameter.

In some embodiments, the trigger condition corresponding to the first sensor further comprises a fourth trigger condition; in the second trigger mode, the second trigger function is executed when the detection signal of the first sensor satisfies the fourth trigger condition and the detection signal of the second sensor satisfies the second trigger condition.

In some embodiments, in the second trigger mode, the first trigger function and/or the second trigger function is selectively executed according to a sequence in which the detection signal of the first sensor satisfies the corresponding trigger condition and the detection signal of the second sensor satisfies the corresponding trigger condition.

In some embodiments, in the second trigger mode, when the detection signal of the first sensor and the detection signal of the second sensor both satisfy respective trigger conditions, the executed at least one trigger function is one of the first trigger function and the second trigger function.

In some embodiments, the at least two trigger sensors further include a third sensor, the method further including: in the first trigger mode, in response to a detection signal of the third sensor satisfying a corresponding trigger condition, executing a third trigger function, wherein the third trigger function is different from the first trigger function and the second trigger function; in the second trigger mode, in response to the detection signal of the third sensor satisfying the corresponding trigger condition, executing the other of the first trigger function and the second trigger function.

In some embodiments, the first sensor is a capacitive sensor, the second sensor is a motion sensor, and the third sensor is a button-type sensor.

In some embodiments, the trigger condition corresponding to the first sensor is configured to detect at least one of the touch action and the tap action, and the trigger condition corresponding to the second sensor is configured to detect the other of the touch action and the tap action.

In some embodiments, the motion state includes a third motion state, wherein a motion intensity characterized by the third motion state is higher than the motion intensity characterized by the second motion state; the selecting the trigger mode according to the motion state includes: in response to the motion state being the third motion state, switching the trigger mode to a third trigger mode, wherein in the third trigger mode, the trigger function of the trigger sensor is disabled.

Another technical solution adopted in the present disclosure is to provide a wearable device. The wearable device includes a processor and a memory, a computer program is stored in the memory, and the processor is configured to execute the computer program to implement the method in the above embodiments.

The beneficial effect of the present disclosure are as follow. Different from the situation in the prior art, the present disclosure provides the trigger sensor in the wearable device to detect the trigger action applied to the wearable device, the wearable device can determine the motion state of the wearer according to the kinematic parameter of the wearer during use, and select different trigger modes according to different motion states. In the different trigger modes, trigger conditions required to be satisfied for executing the same trigger function in the different trigger modes are different, so that the same trigger function can adapt to the different trigger conditions in the different motion states of the wearer, which enables the wearable device to allocate the different trigger modes and adjust trigger conditions of the same trigger function according to the motion state, so that a probability of accidentally triggering the wearable device is reduced after the motion state of the wearer changes, which makes triggering of the trigger function of the wearable device more accurate, thereby improving user experience.

### BRIEF DESCRIPTION OF THE DRAWINGS

FIG. 1 is a block diagram illustrating a structure of a wearable device according to some embodiments of the present disclosure;
FIG. 2 is a flowchart illustrating an exemplary process for triggering a function of a wearable device according to some embodiments of the present disclosure; and
FIG. 3 is another flowchart illustrating a process for triggering a function of a wearable device according to some embodiments of the present disclosure.

### DETAILED DESCRIPTION

Embodiments of the present disclosure are described below with reference to the accompanying drawings in the embodiments of the present disclosure. The technical solutions in the embodiments of the present disclosure are clearly and completely described. Obviously, the described embodiments are only a part of the embodiments of the present disclosure, and not all of the embodiments. Based on the embodiments of the present disclosure, all other embodiments obtained by a person of ordinary skill in the art without creative efforts fall within the scope of protection of the present disclosure.

The term "embodiment" in the present disclosure means that a specific feature, structure, or characteristic described in conjunction with the embodiment may be included in at least one embodiment of the present disclosure. A person skilled in the art explicitly and implicitly understands that the embodiments described in the present disclosure may be combined with other embodiments.

The following is an exemplary description of a wearable device in some embodiments.

The wearable device refers to a portable device that can be directly worn on a wearer or integrated into the wearer's cloth or accessory. For example, the wearable device may be an electronic device such as a Bluetooth earphone worn on the wearer's ear, a smart bracelet worn on the wearer's wrist, or smart glasses worn on the wearer's head, etc.

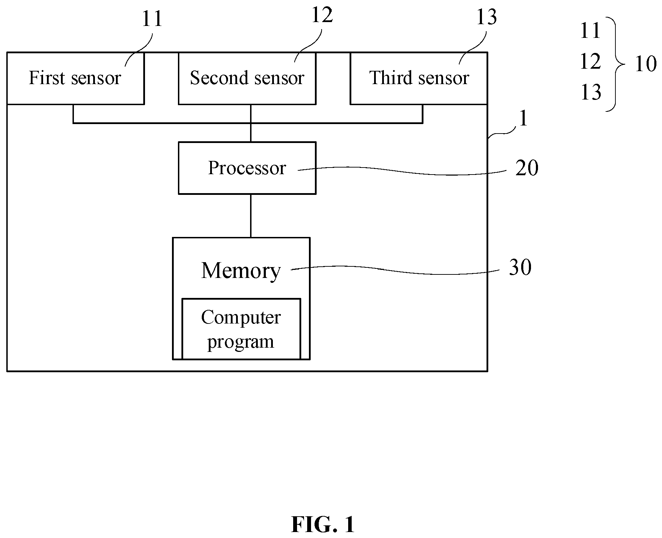

As shown in FIG. 1, in some embodiments, a wearable device 1 may be provided with a trigger sensor 10, and the trigger sensor 10 is configured to detect a trigger action applied to the wearable device 1.

Specifically, when the trigger action is applied to a position of the wearable device 1 corresponding to the trigger sensor 10, the trigger sensor 10 detects the applied action and generates a corresponding detection signal, so that the wearable device 1 is capable of implementing a certain function correspondingly in response to the corresponding detection signal. Merely by way of example, the trigger sensor 10 may be a touch sensor, a tap sensor, a pressure sensor, or the like. The trigger action may be a touch action, a tap action, a press action, or the like.

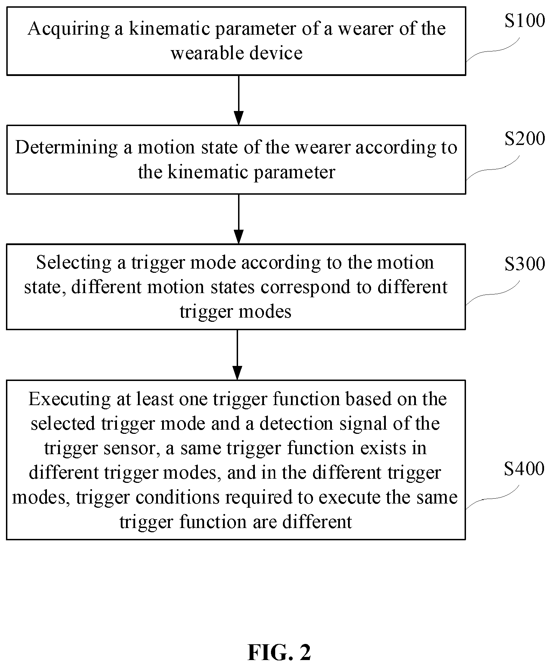

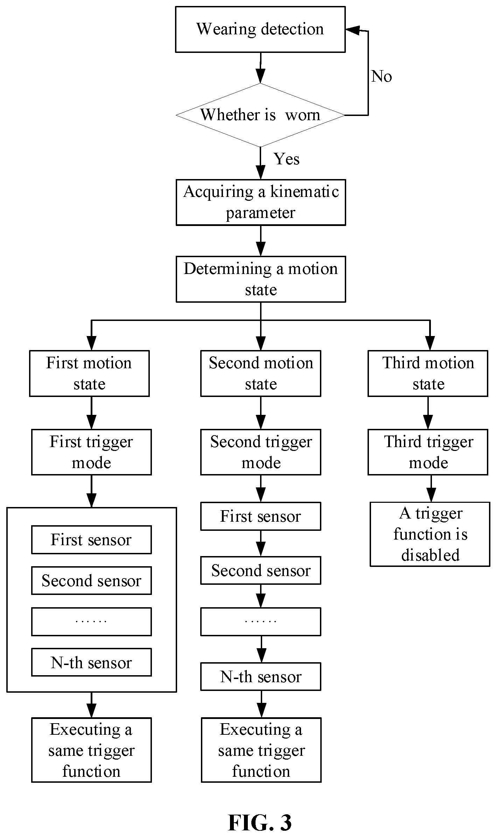

With reference to FIG. 2 and FIG. 3, based on the above structure of the wearable device 1, a method for triggering a function is exemplarily described below. The method for triggering the function includes:
S100: A kinematic parameter of a wearer of the wearable device is acquired.

The kinematic parameter of the wearer is a parameter related to the movement of the wearer. For example, the kinematic parameter may be an acceleration value, an angular velocity value, a velocity value, or the like.

In some embodiments, before operation S100, the wearable device 1 may perform a wearing detection to determine whether the wearable device 1 is worn. In response to the wearable device 1 being worn, the operation S200 is performed. In response to the wearable device 1 not being worn, the wearing detection is continuously performed.

S200: A motion state of the wearer according to the kinematic parameter is determined.

Fluctuation conditions of kinematic parameters are different when the wearer is in different motion states. For example, when the wearer is running, the fluctuation conditions of kinematic parameters such as the acceleration value, the angular velocity value, etc. , are obviously more severe than when the wearer is stationary. Therefore, the motion state of the wearer may be determined according to the fluctuation conditions of the kinematic parameter.

S300: A trigger mode is selected according to the motion state, wherein different motion states correspond to different trigger modes.

Specifically, when the wearer is in different motion states, the probability of the wearable device 1 being accidentally triggered is also different. For example, when the wearer is running, the wearer's hair and cloth may shake, which may be prone to accidentally triggering the wearable device. Moreover, sweat during running may also easily splash onto the wearable device. Therefore, the probability of the wearable device 1 being accidentally triggered in the motion state is much higher than the probability of the wearable device 1 being accidentally triggered when the wearer is stationary.

Therefore, in different trigger modes corresponding to the motion state, conditions for triggering the function of the wearable device 1 may be different. With such a configuration, function triggering of the wearable device 1 can correspond to the motion state of the wearer, so that the wearable device 1 has different trigger modes in different motion states, so that the probability of the wearable device 1 being accidentally triggered can be adjusted correspondingly after the motion state of the wearer changes.

In some embodiments, the motion state may include a first motion state and a second motion state, wherein a motion intensity characterized by the second motion state is higher than a motion intensity characterized by the first motion state. Merely by way of example, the first motion state may be a stationary state, i.e. , a state in which the wearer is relatively quiet in terms of a movement behavior. The second motion state may be a motion state with a higher motion intensity, i.e. , a state in which the wearer is performing a movement behavior. For example, a motion state in which the wearer is walking is the second motion state, and a motion state in which the wearer is sitting quietly is the first motion state.

In some embodiments, the trigger mode may include a first trigger mode and a second trigger mode. The first motion state may correspond to the first trigger mode, and the second motion state may correspond to the second trigger mode.

The selecting a trigger mode according to the motion state in the operation S300 may include operations S310 to S320:
S310: In response to the motion state being the first motion state, the trigger mode is switched to the first trigger mode.
S320: In response to the motion state being the second motion state, the trigger mode is switched to the second trigger mode, wherein a trigger condition required to execute the same trigger function in the second trigger mode is more difficult than a trigger condition required to execute the same trigger function in the first trigger mode

Since the motion intensity of the second motion state is higher than that of the first motion state, the risk of the wearable device 1 being accidentally triggered is higher in the second motion state. Therefore, setting the second trigger mode with more difficult trigger condition for executing the same trigger function, can enable the same trigger function more difficult to trigger in the second trigger mode compared with the same trigger function in the first trigger mode. Conversely, setting the trigger condition with simpler trigger condition than that of the first trigger mode to execute the same trigger function, can make the same trigger function easier to trigger in the first motion state with a lower motion intensity.

Such a configuration, not only can reduce the risk of the wearable device 1 being accidentally triggered when the wearer's motion intensity is high, but also can enable that the wearable device 1 is triggered more easily to execute the corresponding trigger function when the wearer's motion intensity is low, thereby improving the user experience.

In some embodiments, the motion state may include a third motion state, wherein a motion intensity characterized by the third motion state may be higher than the motion intensity characterized by the second motion state.

For example, a motion state in which the wearer is walking is the second motion state, a motion state in which the wearer is running is the third motion state, and the motion intensity of running is higher than the motion intensity of walking.

The the selecting the trigger mode according to the motion state in the operation S300 may include operation S330:
S330: In response to the motion state being the third motion state, the trigger mode is switched to a third trigger mode, wherein in the third trigger mode, the trigger function of the trigger sensor is disabled.

Since the motion intensity of the third motion state is too high, the wearable device 1 is extremely likely to be accidentally triggered by the wearer's hair, cloth, sweat, or other substances when the wearer is in the third motion state. Therefore, in the third trigger mode corresponding to the third motion state, disabling the trigger function of the trigger sensor 10 can reduce the impact of accidentally triggering the wearable device 1 on the user in a high motion intensity state, thereby improving the user experience.

S400: At least one trigger function is executed based on the selected trigger mode and a detection signal of the trigger sensor, wherein a same trigger function exists in different trigger modes, and in the different trigger modes, trigger conditions required to execute the same trigger function are different.

Specifically, the same trigger function refers to a trigger function that can be executed by the wearable device 1 in response to the detection signal of the trigger sensor 10 in the different trigger modes. For example, the wearable device 1 may be a Bluetooth smart earphone, the same trigger function may be switching songs, adjusting volume, etc. , and the wearer may implement trigger functions such as switching songs or adjusting volume by touching the wearable device 1 in the different trigger modes.

Different trigger functions may correspond to different trigger conditions, and the same trigger function may also correspond to the different trigger conditions in the different trigger modes.

With such a configuration, the same trigger function can adapt to the different trigger conditions in the different motion states, so that the wearable device 1 can allocate different trigger modes according to the motion state to adjust the trigger condition of the same trigger function, thereby reducing the probability of accidentally triggering the wearable device 1 after the wearer's motion state changes, and also making the triggering control of the trigger function of the wearable device 1 more accurate, thereby improving the user experience.

In some embodiments, the trigger condition that needs to be satisfied to execute the same trigger function in the second trigger mode may include the trigger condition that needs to be satisfied to execute the same trigger function in the first trigger mode. That is, in the second trigger mode, if the trigger condition needs to be satisfied to execute the same trigger function, the corresponding trigger condition needs to be satisfied in the first trigger mode firstly, and then another trigger condition corresponding to the second trigger mode is needs to be satisfied secondly. If the trigger condition corresponding to executing the same trigger function in the first trigger mode is not satisfied, the trigger condition corresponding to executing the same trigger function in the second trigger mode may not be satisfied either, and the same trigger function may not be executed.

For example, in the first trigger mode, the trigger condition that needs to be satisfied to execute the same trigger function may be that the trigger sensor 10 detects a touch action. The trigger condition that needs to be satisfied to execute the same trigger function in the second trigger mode may be touching and tapping the trigger sensor 10, so in the second trigger mode, touching the trigger sensor 10 may not satisfy the trigger condition required to execute the same trigger function, and thus the same trigger function may not be executed.

In some embodiments, at least two trigger sensors 10 may be provided. In the second trigger mode, a count of the trigger sensors 10 that need to satisfy the corresponding trigger conditions for executing the same trigger function may be greater than a count of the trigger sensors 10 that need to satisfy the corresponding trigger conditions for executing the same trigger function in the first trigger mode.

Specifically, the count of trigger sensors 10 is associated with the trigger condition corresponding to the same trigger function, and in different trigger modes, the trigger condition for executing the same trigger function is that a corresponding count of trigger sensors 10 are all triggered to generate a corresponding detection signal.

Merely by way of example, two trigger sensors 10 may be provided. In the second trigger mode, the two trigger sensors 10 needs to satisfy the corresponding trigger condition for executing the same trigger function. That is, the same trigger function may be executed only when a trigger action is applied to the two trigger sensors 10 to generate the detection signal. In the first trigger mode, one trigger sensor 10 needs to satisfy the corresponding trigger condition for executing the same trigger function, that is, the same trigger function may be executed when a trigger action is applied to the one trigger sensor 10 to generate the detection signal.

In this way, the count of trigger sensors 10 is used to distinguish the trigger conditions corresponding to executing the same trigger function in the first trigger mode and the second trigger mode, so that the count of trigger sensors 10 corresponding to the same trigger function in the first trigger mode is smaller, and the count of trigger sensors 10 corresponding to the same trigger function in the second trigger mode is larger. Therefore, the present disclosure can achieve a simpler trigger condition for the same trigger function in the first trigger mode and a more difficult trigger condition for the same trigger function in the second trigger mode through a simple configuration, thus reducing the difficulty of switching the trigger modes and simplifying the program for switching the trigger modes.

In some embodiments, as shown in FIG. 1, the trigger sensor 10 may include a first sensor 11 and a second sensor 12. The physical parameter detected by the first sensor 11 is different from the physical parameter detected by the second sensor 12.

The executing the at least one trigger function based on the selected trigger mode and the detection signal of the trigger sensor 10 in operation S400 may include the following operations S410 to S420:

S410: In the first trigger mode, executing the same trigger function requires that a detection signal of at least one of the first sensor and the second sensor satisfies a corresponding trigger condition.

Specifically, in the first trigger mode, when one of the first sensor 11 and the second sensor 12 detects the trigger action applied to the wearable device 1 and generates the detection signal corresponding to the trigger action, the trigger condition for executing the same trigger function is satisfied, and thus the same trigger function may be executed. In this way, the trigger condition for the same trigger function in the first trigger mode can be simpler, so that the wearer can more conveniently perform a triggering control on the wearable device 1 in the first motion state with a weaker motion intensity.

In some embodiments, in the first trigger mode, when the first sensor 11 satisfies the corresponding trigger condition and when the second sensor 12 satisfies the corresponding trigger condition, the same trigger function may be executed. In other words, in the first trigger mode, the first sensor 11 and the second sensor 12 may correspond to the same trigger function, and when either of the first sensor 11 and the second sensor 12 satisfies the corresponding trigger condition, the same trigger function may be executed.

For example, in the first trigger mode, the first sensor 11 may correspond to a trigger action of touching the wearable device 1 to generate a corresponding detection signal, and the wearable device 1 executes a song switching function based on the detection signal generated by the touch action; the second sensor 12 may correspond to a trigger action of tapping the wearable device 1 to generate a corresponding detection signal, and the wearable device 1 executes a song pause playback function based on the detection signal generated by the tapping action. Therefore, when the first sensor 11 detects a touch on the wearable device 1 or the second sensor 12 detects a tap on the wearable device 1, the wearable device 1 executes the song switching function.

With such a configuration, the same trigger function of the wearable device 1 in the first trigger mode can be triggered more easily, thereby increasing the triggering sensitivity of the wearable device 1.

In other embodiments, in the first trigger mode, when the detection signal of the first sensor 11 satisfies the corresponding trigger condition, a first trigger function may be executed. When the detection signal of the second sensor 12 satisfies the corresponding trigger condition, a second trigger function may be executed. The first trigger function is different from the second trigger function.

Specifically, the first sensor 11 corresponds to the first trigger function, and the second sensor 12 corresponds to the second trigger function. Merely by way of example, in the first trigger mode, the first sensor 11 may correspond to the trigger action of touching the wearable device 1 to generate the corresponding detection signal, making the wearable device 1 to execute the song switching function; and the second sensor 12 may correspond to the trigger action of tapping the wearable device 1 to generate the corresponding detection signal, making the wearable device 1 to execute the song pause playback function.

With such a configuration, the trigger functions of the wearable device 1 in the first trigger mode can be made more diverse, so that the wearer in the first motion state with a weaker motion intensity can control the wearable device 1 to achieve more trigger functions through multiple trigger actions, thereby enhancing the wearer's user experience.

S410: In the second trigger mode, executing the same trigger function requires that detection signals of both the first sensor and the second sensor satisfy respective corresponding trigger conditions.

Specifically, in the second trigger mode, the trigger condition for executing the same trigger function is that both the first sensor 11 and the second sensor 12 need to generate detection signals corresponding to the trigger function.

In the first trigger mode, executing the same trigger function requires that the detection signal of either one or one of the first sensor 11 and the second sensor 12 satisfies the corresponding trigger condition, but in the second trigger mode, executing the same trigger function as in the first trigger mode requires that both the first sensor 11 and the second sensor 12 generates the detection signals corresponding to the trigger function.

For example, in some embodiments, in the first trigger mode, the wearable device 1 may execute the trigger function of song switching after the first sensor 11 detects the touch action, but in the second trigger mode, the trigger function of song switching can be executed after the first sensor 11 detects the touch action and the second sensor 12 detects the tap action.

Since the second trigger mode corresponds to the second motion state with a stronger motion intensity, configuring the second trigger mode in this way can make the same trigger function of the wearable device 1 less likely to be triggered compared with the first mode when the wearer is in the second motion state with a higher intensity, thereby reducing the situation of accidentally triggering the wearable device 1 when the wearer is in the second motion state with higher intensity, and also improving the accuracy of trigger function activated.

In some embodiments, in the second trigger mode, the first trigger function is executed when the detection signal of the first sensor 11 and the detection signal of the second sensor 12 respectively satisfy corresponding trigger conditions, wherein the trigger condition corresponding to the second sensor 12 in the second trigger mode is different from the trigger condition corresponding to the first sensor 11 in the first trigger mode.

Therefore, the first trigger function is the same trigger function in both the first trigger mode and the second trigger mode. In the first trigger mode, executing the first trigger function requires that the detection signal of the first sensor 11 satisfies the corresponding trigger condition, but in the second trigger mode, executing the first trigger function requires that the detection signals of the first sensor 11 and the second sensor 12 satisfy the respective corresponding trigger conditions.

With such a configuration, the condition that needs to be satisfied for the wearable device 1 to execute the first trigger function in the second trigger mode is more complex, so that the first trigger function is less likely to be triggered and executed when the wearer is in the second motion state with a high motion intensity, thereby reducing the risk of accidentally executing the first trigger function of the wearable device 1 in the second trigger mode, and making the triggering control of the trigger function of the wearable device 1 more accurate.

In some embodiments, the trigger condition corresponding to the first sensor 11 may include a first trigger condition, and the trigger condition corresponding to the second sensor 12 may include a second trigger condition and a third trigger condition.

In the first trigger mode, the trigger condition corresponding to the second sensor 12 may be the second trigger condition. In the second trigger mode, the trigger condition corresponding to the second sensor 12 may be the third trigger condition. The second trigger condition and the third trigger condition are not the same.

In the first trigger mode, when the detection signal of the first sensor 11 satisfies the first trigger condition, the first trigger function is executed. When the detection signal of the second sensor 12 satisfies the second trigger condition, the second trigger function is executed.

In the second trigger mode, when the detection signal of the first sensor 11 satisfies the first trigger condition and the detection signal of the second sensor 12 satisfies the third trigger condition, the first trigger function is executed. In the second trigger mode, when the detection signal of the first sensor 11 satisfies the first trigger condition and the detection signal of the second sensor 12 satisfies the second trigger condition, neither the first trigger function nor the second trigger function is executed. Alternatively, when only the detection signal of the first sensor 11 satisfies the first trigger condition, or only the detection signal of the second sensor 12 satisfies the second trigger condition, neither the first trigger function nor the second trigger function is executed.

Therefore, in the second trigger mode, the second sensor 12 can become one of the corresponding trigger conditions of the first trigger function by changing the trigger condition of the second sensor 12, thereby reusing the second sensor 12, which not only can reduce the possibility of accidentally triggering of the first trigger function in the second trigger mode, but also can simplify the structure of the wearable device 1.

In some embodiments, the first trigger condition and the third trigger condition may be configured to detect one of a touch action and a tap action, and the second trigger condition may be configured to detect the other of the touch action and the tap action.

For example, the first trigger condition and the third trigger condition are configured to detect the touch action, and the second trigger condition is configured to detect the tap action. Specifically, in the first trigger mode, when the first sensor 11 detects the touch action, the detection signal of the first sensor 11 satisfies the first trigger condition, and the first trigger function is executed. When the second sensor 12 detects the tap action, the detection signal of the second sensor 12 satisfies the second trigger condition, and the second trigger function is executed. In the second trigger mode, when the wearer applies the touch action and the first sensor 11 detects the touch action, the detection signal of the first sensor 11 satisfies the first trigger condition, and the second sensor 12 also detects the touch action to satisfy the third trigger condition. At this time, the first trigger function is executed.

By setting the first trigger condition of the first sensor 11 and the third trigger condition of the second sensor 12 in the second trigger mode to detect the same action, complexity of a trigger condition of the first trigger function is increased, and the trigger action for triggering the first trigger function is simplified, to facilitate execution of the first trigger function by detecting the trigger action of the wearer. Moreover, in the second trigger mode, both the first sensor 11 and the second sensor 12 are used to detect the same action, which can more accurately confirm the trigger action of the wearer, thereby improving accuracy of executing the trigger function in the wearable device 1.

In some embodiments, the first trigger condition is configured to detect a first parameter of at least one of the touch action or the tap action, and the third trigger condition is configured to detect a second parameter of at least one of the touch action or the tap action.

The first trigger condition and the third trigger condition are both configured to detect one of the touch action and the tap action, and the first trigger condition corresponding to the first sensor 11 and the third trigger condition corresponding to the second sensor 12 are configured to detect different parameters of the same trigger action.

Merely by way of example, the first parameter is a capacitance parameter, and the second parameter is a vibration waveform parameter. For example, the first trigger condition is configured to detect the capacitance parameter of the touch action, and the third trigger condition is configured to detect the vibration waveform parameter of the touch action.

In the second trigger mode, two sensors are set to detect the same trigger action, which improves detection accuracy of the trigger action by the wearable device 1, so that the trigger action of the wearer can be more accurately distinguished when the wearer is in the second motion state with a high motion intensity, thereby reducing a situation where the wearable device 1 is accidentally triggered by hair, cloth, or the like.

Certainly, in other embodiments, the first trigger condition, the second trigger condition, and the third trigger condition are also configured to detect other trigger actions besides the touch action and the tap action, for example, a slide action or a press action, or the like. The first parameter and the second parameter are also other parameter values such as an acceleration parameter or a pressure parameter.

In some embodiments, the trigger condition corresponding to the first sensor 11 further includes a fourth trigger condition. In the second trigger mode, the second trigger function is executed when the detection signal of the first sensor 11 satisfies the corresponding fourth trigger condition and the detection signal of the second sensor 12 satisfies the corresponding second trigger condition.

The fourth trigger condition and the first trigger condition detect different trigger actions. For example, the first trigger condition is configured to detect the touch action, and the fourth trigger condition is configured to detect the tap action.

In the first trigger mode, the trigger condition corresponding to the first sensor 11 is only the first trigger condition. In the second trigger mode, the trigger condition corresponding to the first sensor 11 is the first trigger condition and the fourth trigger condition.

For example, in the first trigger mode, the first trigger condition of the first sensor 11 is configured to detect the touch action to execute the first trigger function, and the second trigger condition of the second sensor 12 is configured to detect the tap action to execute the second trigger function. In the second trigger mode, the first trigger condition of the first sensor 11 and the third trigger condition of the second sensor 12 are configured to detect different parameters of the touch action. When the detection signal of the first sensor 11 satisfies the first trigger condition and the detection signal of the second sensor 12 satisfies the third trigger condition, the first trigger function is executed. The fourth trigger condition of the first sensor 11 and the second trigger condition of the second sensor 12 are configured to detect different parameters of the tap action. The second trigger function is executed when the detection signal of the second sensor 12 satisfies the fourth trigger condition and the detection signal of the second sensor 12 satisfies the second trigger condition.

By enriching the trigger conditions of the first sensor 11 and the second sensor 12, a detection range of the second trigger mode is enriched, so that multiple trigger actions are detected in the second trigger mode, and multiple trigger functions are executed. Moreover, compared with the first trigger mode, detection of the trigger action in the second trigger mode is more complex, so that detection accuracy of the trigger action by the wearable device 1 can be improved, and a situation where the wearable device 1 is accidentally triggered by hair, cloth, or the like to directly execute the trigger function is reduced.

In other embodiments, in the second trigger mode, the first trigger function and/or the second trigger function is selectively executed according to a sequence in which the detection signal of the first sensor 11 satisfies the corresponding trigger condition and the detection signal of the second sensor 12 satisfies the corresponding trigger condition.

In the first trigger mode, the detection signal of the first sensor 11 satisfying the corresponding trigger condition and the detection signal of the second sensor 12 satisfying the corresponding trigger condition are configured to detect different trigger actions. For example, the detection signal of the first sensor 11 satisfying the corresponding trigger condition is configured to detect the touch action, and the detection signal of the second sensor 12 satisfying the corresponding trigger condition is configured to detect the tap action.

Specifically, in the second trigger mode, when the detection signals of the first sensor 11 and the second sensor 12 both satisfy the corresponding trigger actions, one or both of the first trigger function and the second trigger function are selectively executed according to the sequence.

For example, in the second trigger mode, when the wearer first applies the touch action and then applies the tap action, the first trigger condition of the first sensor 11 and the third trigger condition of the second sensor 12 are first satisfied, and then the second trigger condition of the second sensor 12 and the fourth trigger condition of the first sensor 11 are satisfied. At this time, only the first trigger function is executed, or the first trigger function is executed and then the second trigger function is executed.

Alternatively, in the second trigger mode, when the wearer first applies the tap action and then applies the touch action, the second trigger condition of the second sensor 12 and the fourth trigger condition of the first sensor 11 are first satisfied, and then the first trigger condition of the first sensor 11 and the third trigger condition of the second sensor 12 are satisfied. At this time, only the second trigger function is executed, or the second trigger function is executed and then the first trigger function is executed.

Alternatively, in the second trigger mode, the trigger action corresponding to the first sensor 11 and the trigger action corresponding to the second sensor 12 are also different. Merely by way of example, the trigger condition corresponding to the first sensor 11 is configured to detect one of the touch action and the tap action, and the trigger condition corresponding to the second sensor 12 is configured to detect the other of the touch action and the tap action. For example, the trigger condition of the first sensor 11 is configured to detect the touch action, and the trigger condition of the second sensor 12 is configured to detect the tap action. In the second trigger mode, the trigger condition corresponding to the first sensor 11 and the trigger condition corresponding to the second sensor 12 both need to be satisfied to selectively execute the corresponding trigger function according to the sequence of the trigger actions.

For example, in the second trigger mode, when the wearer first applies the touch action and then applies the tap action, the first sensor 11 detects the touch action to satisfy the corresponding trigger condition, and the second sensor 12 detects the tap action to satisfy the corresponding trigger condition. Then, only the first trigger function corresponding to the touch action is executed, or the first trigger function corresponding to the touch action is executed first, and then the first trigger function corresponding to the tap action is executed. If the wearer first applies the tap action and then applies the touch action in the second trigger mode, only the second trigger function corresponding to the tap action is executed, or the second trigger function corresponding to the tap action is executed first, and then the first trigger function corresponding to the touch action is executed.

By setting one or both of the first trigger function and the second trigger function to be selectively executed according to a sequence in which the trigger conditions are satisfied in the second trigger mode, the wearer can trigger a corresponding trigger function by controlling the sequence of applied trigger actions, so that the wearable device 1 is more intelligent. Such a configuration, not only can use two sensors to detect to make the trigger conditions more complex, thereby reducing accidentally triggering, but also can make execution of the trigger functions more accurate.

In other embodiments, in the second trigger mode, when the detection signal of the first sensor and the detection signal of the second sensor both satisfy respective trigger conditions, the executed at least one trigger function is one of the first trigger function and the second trigger function.

In other words, in the second trigger mode, only when the trigger conditions corresponding to the first sensor 11 and the second sensor 12 are both satisfied, one of the first trigger function and the second trigger function is executed, and the other of the first trigger function and the second trigger function is not executed.

Merely by way of example, the trigger condition corresponding to the first sensor 11 is configured to detect one of the touch action and the tap action, and the trigger condition corresponding to the second sensor 12 is configured to detect the other of the touch action and the tap action. In the second trigger mode, both the touch action and the tap action need to be applied to the wearable device 1 to execute one of the first trigger function and the second trigger function.

Such a configuration can increase difficulty of triggering a function in the second trigger mode, thereby reducing a situation where the wearable device 1 is accidentally triggered to incorrectly execute the trigger function, and can improve accuracy of function switching.

In some embodiments, as shown in FIG. 1, the trigger sensor 10 further includes a third sensor 13, and the method for triggering the function further includes the following operations S510 to S520.

S510: In the first trigger mode, in response to a detection signal of the third sensor satisfying a corresponding trigger condition, a third trigger function is executed, wherein the third trigger function is different from the first trigger function and the second trigger function.

For example, the first trigger function is switching a song, the second trigger function is pausing playback of the song, and the third trigger function is decreasing or increasing volume. Certainly, in other embodiments, the first trigger function, the second trigger function, and the third trigger function are other trigger functions such as pausing connection with a mobile terminal or switching a mode.

S520: In the second trigger mode, in response to the detection signal of the third sensor satisfying the corresponding trigger condition, the other of the first trigger function and the second trigger function is executed.

In the second trigger mode, when the detection signals of the first sensor 11 and the second sensor 12 both satisfy the respective corresponding trigger conditions and the detection signal of the third sensor 13 does not satisfy the corresponding trigger condition, the executed trigger function is one of the first trigger function and the second trigger function. When the detection signals of the first sensor 11, the second sensor 12, and the third sensor 13 all satisfy the corresponding trigger conditions, the executed trigger function is the other of the first trigger function and the second trigger function. In the second trigger mode, the third trigger function is disabled, or the third trigger function requires other added trigger conditions to be executed.

The addition of the third sensor 13 not only further enriches the trigger functions of the wearable device 1 in the first trigger mode, but also enables the wearable device 1 to execute two trigger functions in the second trigger mode, thereby enriching the trigger functions of the wearable device 1. Moreover, in the second trigger mode, using the third sensor 13 to increase the trigger difficulty of the first trigger function or the second trigger function, can distinguish the trigger conditions of the first trigger function and the second trigger function, thereby enabling more accurate execution of the trigger functions in the wearable device 1 to reduce accidentally triggering.

In some embodiments, the first sensor 11 may be a capacitive sensor, the second sensor 12 may be a motion sensor, and the third sensor 13 may be a button-type sensor.

The capacitive sensor uses various types of capacitors as sensing elements and can convert a measured physical quantity or mechanical quantity into a change in capacitance. The capacitive sensor can convert the trigger action applied by the wearer to the wearable device into the change in capacitance.

The motion sensor may be used to measure physical quantities related to motion, such as a position, a displacement, a velocity, an acceleration, a vibration displacement, an amplitude, a wave propagation, or the like. The motion sensor may also be an inertial sensor, which may be used to detect three basic linear motions (accelerations) and three basic angular motions (angular velocities).

The working principle of the button-type sensor is based on mechanical contact and circuit conduction. When a button of the button-type sensor is pressed, a spring or an elastic body is compressed, causing the button to move downward until contacts close to form a circuit path. Therefore, the button-type sensor can detect that the button is pressed.

Specifically, for the first sensor 11, the wearable device 1 may determine whether the detection signal of the first sensor 11 satisfies the corresponding trigger condition according to a change amount of a capacitance value. For the second sensor 12, the wearable device 1 may determine whether the detection signal of the second sensor 12 satisfie the corresponding trigger condition according to a change amount of a motion-related value caused by the trigger action applied to the second sensor 12. For the third sensor 13, the wearable device 1 can determine whether the detection signal of the third sensor 13 satisfies the corresponding trigger condition according to a current value corresponding to a button circuit in the third sensor 13.

By setting different types of sensors in the wearable device 1, a detection range and types of the wearable device 1 can be increased, so that the wearable device 1 can judge trigger actions more sensitively and accurately.

In some embodiments, as shown in FIG. 1, the wearable device 1 may include a processor 20 and a memory 30, a computer program is stored in the memory 30, and the processor 20 is configured to execute the computer program to implement the method described in the foregoing embodiments.

The processor 20 may also be referred to as a Central Processing Unit (CPU). The processor 20 may be an integrated circuit chip with signal processing capability. The processor 20 may also be a general-purpose processor, a digital signal processor (DSP), an application specific integrated circuit (ASIC), a field programmable gate array (FPGA) or other programmable logic device, a discrete gate or transistor logic device, or a discrete hardware component. The general-purpose processor may be a microprocessor, or the processor 20 may be any conventional processor.

The memory 30 may include a random access memory (RAM), a read-only memory (ROM), a flash memory, an erasable programmable read-only memory (EPROM), an electrically erasable programmable read-only memory (EEPROM), a register, a hard disk, a removable disk, a CD-ROM, etc. The memory may store program data. The program data may include, for example, a single instruction or multiple instructions, and may be distributed in several different code segments, distributed among different programs, and distributed across multiple memories 30. The memory 30 may be coupled to the processor 20 so that the processor 20 is capable of reading/writing information from/to the memory 30. Certainly, the memory 30 may be integrated into the processor 20. The present disclosure does not limit this, and those skilled in the art can make selections according to actual needs.

In summary, the present disclosure sets the trigger sensor 10 in the wearable device 1 to detect the trigger action applied to the wearable device 1. During use, the wearable device 1 can determine the motion state of the wearer according to the kinematic parameter of the wearer, and then select different trigger modes according to different motion states. In different trigger modes, trigger conditions required to be satisfied for executing a same trigger function in the different trigger modes are different. In this way, the same trigger function can adapt to different trigger conditions in different motion states of the wearer, so that the wearable device 1 can allocate different trigger modes according to the motion state to adjust the trigger conditions of the same trigger function, thereby reducing a probability of accidentally triggering the wearable device 1 after the motion state of the wearer changes, which makes trigger control of the trigger functions of the wearable device 1 more accurate, thereby improving user experience.

In the several embodiments provided in the present disclosure, it should be understood that the disclosed detection method may be implemented in other manners. For example, the wearable device 1 embodiments described above are merely illustrative. For example, division of modules or units is merely a logical function division. In actual implementation, there may be another division manner. For example, multiple units or components may be combined or integrated into another system, or some features may be omitted or not executed. In addition, mutual coupling or direct coupling or communication connection shown or discussed may be indirect coupling or communication connection through some interfaces, apparatuses or units, and may be electrical, mechanical or in other forms.

Units described as separate components may or may not be physically separated. Components displayed as units may or may not be physical units, i.e. , may be located in one place, or may be distributed on multiple network units. Some or all of the units may be selected according to actual needs to achieve the objectives of the solutions of the present embodiment.

In addition, functional units in various embodiments of the present disclosure may be integrated into one processing unit, or each of the units may exist alone physically, or two or more units are integrated into one unit. The above integrated unit may be implemented in the form of hardware, or may be implemented in the form of a software functional unit.

The foregoing is only embodiments of the present disclosure, and is not intended to limit the patent scope of the present disclosure. Equivalent structures or equivalent process transformations made by using the specification and drawings of the present disclosure, or direct or indirect application in other related technical fields are equally included in the patent protection scope of the present disclosure.

## Claims

1. A method for triggering a function of a wearable device, wherein the wearable device is provided with a trigger sensor, the trigger sensor is configured to detect a trigger action applied to the wearable device, the method comprising:
acquiring a kinematic parameter of a wearer of the wearable device;
determining a motion state of the wearer according to the kinematic parameter;
selecting a trigger mode according to the motion state, wherein different motion states correspond to different trigger modes;
executing at least one trigger function based on the selected trigger mode and a detection signal of the trigger sensor, wherein a same trigger function exists in different trigger modes, and in the different trigger modes, trigger conditions required to execute the same trigger function are different.

2. The method according to claim 1, wherein the motion state comprises a first motion state and a second motion state, wherein a motion intensity **characterized by** the second motion state is higher than a motion intensity **characterized by** the first motion state; the trigger mode comprises a first trigger mode and a second trigger mode;
the selecting the trigger mode according to the motion state comprises:
in response to the motion state being the first motion state, switching the trigger mode to the first trigger mode;
in response to the motion state being the second motion state, switching the trigger mode to the second trigger mode, wherein a trigger condition required to execute the same trigger function in the second trigger mode is more difficult than a trigger condition required to execute the same trigger function in the first trigger mode.

3. The method according to claim 2, wherein the wearable device is provided with at least two trigger sensors, wherein a count of trigger sensors required to satisfy corresponding trigger conditions for executing the same trigger function in the second trigger mode is greater than a count of trigger sensors required to satisfy corresponding trigger conditions for executing the same trigger function in the first trigger mode.

4. The method according to claim 3, wherein the at least two trigger sensors comprise a first sensor and a second sensor;
the executing the at least one trigger function based on the selected trigger mode and the detection signal of the trigger sensor comprises:
in the first trigger mode, executing the same trigger function requires that a detection signal of at least one of the first sensor and the second sensor satisfies a corresponding trigger condition;
in the second trigger mode, executing the same trigger function requires that detection signals of both the first sensor and the second sensor satisfy respective corresponding trigger conditions.

5. The method according to claim 4, wherein in the first trigger mode, the same trigger function is executed when the first sensor satisfies the corresponding trigger condition and when the second sensor satisfies the corresponding trigger condition.

6. The method according to claim 4, wherein
in the first trigger mode, a first trigger function is executed when a detection signal of the first sensor satisfies a corresponding trigger condition, and a second trigger function is executed when a detection signal of the second sensor satisfies a corresponding trigger condition, wherein the first trigger function is different from the second trigger function.

7. The method according to claim 6, wherein
in the second trigger mode, the first trigger function is executed when the detection signal of the first sensor and the detection signal of the second sensor respectively satisfy corresponding trigger conditions, wherein the trigger condition corresponding to the second sensor in the second trigger mode is different from the trigger condition corresponding to the second sensor in the first trigger mode.

8. The method according to claim 7, wherein the trigger condition corresponding to the first sensor comprises a first trigger condition, and the trigger condition corresponding to the second sensor comprises a second trigger condition and a third trigger condition;
in the first trigger mode, the first trigger function is executed when the detection signal of the first sensor satisfies the first trigger condition, and the second trigger function is executed when the detection signal of the second sensor satisfies the second trigger condition;
in the second trigger mode, the first trigger function is executed when the detection signal of the first sensor satisfies the first trigger condition and the detection signal of the second sensor satisfies the third trigger condition.

9. The method according to claim 8, wherein the first trigger condition and the third trigger condition are configured to detect one of a touch action and a tap action, and the second trigger condition is configured to detect the other of the touch action and the tap action.

10. The method according to claim 9, wherein the first trigger condition is configured to detect a first parameter of at least one of the touch action and the tap action, and the third trigger condition is configured to detect a second parameter of at least one of the touch action and the tap action.

11. The method according to claim 10, wherein the first parameter is a capacitance parameter, and the second parameter is a vibration waveform parameter.

12. The method according to claim 8, wherein the trigger condition corresponding to the first sensor further comprises a fourth trigger condition;
in the second trigger mode, the second trigger function is executed when the detection signal of the first sensor satisfies the fourth trigger condition and the detection signal of the second sensor satisfies the second trigger condition.

13. The method according to claim 6, wherein
in the second trigger mode, the first trigger function and/or the second trigger function is selectively executed according to a sequence in which the detection signal of the first sensor satisfies the corresponding trigger condition and the detection signal of the second sensor satisfies the corresponding trigger condition.

14. The method according to claim 6, wherein
in the second trigger mode, when the detection signal of the first sensor and the detection signal of the second sensor both satisfy respective trigger conditions, the executed at least one trigger function is one of the first trigger function and the second trigger function.

15. The method according to claim 14, wherein the at least two trigger sensors further comprise a third sensor, the method further comprising:
in the first trigger mode, in response to a detection signal of the third sensor satisfying a corresponding trigger condition, executing a third trigger function, wherein the third trigger function is different from the first trigger function and the second trigger function;
in the second trigger mode, in response to the detection signal of the third sensor satisfying the corresponding trigger condition, executing the other of the first trigger function and the second trigger function.

16. The method according to claim 15, wherein the first sensor is a capacitive sensor, the second sensor is a motion sensor, and the third sensor is a button-type sensor.

17. The method according to any one of claims 11 to 16, wherein the trigger condition corresponding to the first sensor is configured to detect at least one of the touch action and the tap action, and the trigger condition corresponding to the second sensor is configured to detect the other of the touch action and the tap action.

18. The method according to any one of claims 2 to 17, wherein the motion state comprises a third motion state, wherein a motion intensity **characterized by** the third motion state is higher than the motion intensity **characterized by** the second motion state;
the selecting the trigger mode according to the motion state comprises:
in response to the motion state being the third motion state, switching the trigger mode to a third trigger mode, wherein in the third trigger mode, the trigger function of the trigger sensor is disabled.

19. A wearable device, wherein the wearable device comprises a processor and a memory, a computer program is stored in the memory, and the processor is configured to execute the computer program to implement a method according to any one of claims 1 to 18.
